# EUROPÄISCHE PATENTSCHRIFT

(11) **EP 0 843 083 B1**
(45) Veröffentlichungstag und Bekanntmachung des Hinweises auf die Patenterteilung: **08.10.2003**
(21) Anmeldenummer: 97810813.2
(22) Anmeldetag: 31.10.1997
(51) Int. Cl.: F02C 7/224, F02C 3/30, F23R 3/30

(54) **Brennstoffvorverdampfer**
Fuel preevaporator
Préevaporateur de combustible

(30) Priorität: 16.11.1996 DE 19647492
(43) Veröffentlichungstag der Anmeldung: 20.05.1998
(73) Patentinhaber: ALSTOM (Switzerland) Ltd, 5401 Baden (CH)
(72) Erfinder: Buss, Johannes, 77797 Ohlsbach (DE); Döbbeling, Klaus, Dr., 5200 Windisch (CH); Winkler, Dieter, 79787 Lauchringen (DE)

(56) Entgegenhaltungen:
- EP-A- 0 019 421
- EP-A- 0 582 427
- GB-A- 1 566 525
- US-A- 2 792 058
- US-A- 3 691 762
- US-A- 4 838 029

## Beschreibung

### Technisches Gebiet

Gegenstand der Erfindung *ist ein Brennstoffvorverdampfer* zur Speisung einer Gasturbine sowohl mit flüssigen wie auch mit gasförmigen Brennstoffen gemäss dem Oberbegriff des unabhängigen Patentanspruchs.

### Stand der Technik

Herkömmliche Gasturbinen, wenn sie sowohl mit flüssigen wie auch mit gasförmigen Brennstoffen betrieben werden, weisen zumeist für jede Art des Brennstoffes getrennte Zufuhrwege auf. Für die Verbrennung von gasförmigem Brennstoff werden im allgemeinen Vormischbrenner eingesetzt, in welchen gasförmiger Brennstoff mit der Verbrennungsluft in Vormischzonen vermischt und verbrannt wird. Bei der Verwendung von flüssigem Brennstoff wird dieser durch eine oder mehrere Düsen in die Vormischzone eingespritzt, wie dies beispielsweise in EP 0704657 dargestellt ist.
Die Vermischung des eingespritzten flüssigen Brennstoffes mit der Verbrennungsluft ist jedoch unzureichend, insbesondere, weil die Tröpfchengroesse nicht ausreichend klein gehalten werden kann.
Ausserdem ist die Verwendung von zwei getrennten Zufuhrwegen technisch sehr aufwendig, ohne dass dadurch eine Verbesserung der Gasturbinenleistung erreicht wird. Beide Brennstoffarten in einem einzigen Zufuhrsystem zu verwenden, ist jedoch nicht ohne weiteres möglich, weil sehr unterschiedliche Impulsverhältnisse beim Gaseintritt in die Brennkammer bei gleicher Energiezufuhr aufgrund der unterschiedlichen volumetrischen Heizwerte flüssiger und gasförmiger Brennstoffe vorliegen. Nur bei annähernd gleichen volumetrischen Heizwerten bleibt die Wärmelieferung an den Brenner gleich und in gewissen Grenzen damit auch die Eindringtiefe der Brennstoffstrahlen und die Form der Flamme. Und nur unter Einhaltung dieser Kriterien können Brenner überhaupt mit wechselnden Brennstoffen betrieben werden.

Es ist an sich bekannt, flüssige Brennstoffe zu verdampfen und in dampfförmiger Form einem Brenner oder einer Brennkammer zuzuführen. In erster Linie zielen diese Lösungen darauf ab, die Mischgüte zwischen flüssigem Brennstoff und Verbrennungsluft zu verbessern (US 3691762), der kalorischen Verwertung von schwer entflammbaren Schwer- oder Rückstandsölen eine breitere Basis zu schaffen (US 2792058; US 4838029) oder das im Zusammenhang mit der Verdampfung flüssiger Brennstoffe permanente Problem der Bildung von Ablagerungen aus Crackrückständen an den heissen Verdampferflächen zu vermindern (EP 582427).
Zur Lösung des Problems, Brennstoffe unterschiedlicher Provenienz, insbesondere gasförmige und flüssige Brennstoffe oder verschiedene Flüssigbrennstoffe, wechselweise oder gegebenenfalls auch gemeinsam über ein einziges Zufuhrsystems einem Brenner zuzuführen und dabei die Einhaltung gleicher Impulsverhältnisse an dem Brenner zu gewährleisten, können diesen technischen Lösungen jedoch keinen Beitrag leisten.

Die Druckschriften EP 0019421 und GB 1566525 offenbaren Lösungen zur Verbrennung flüssiger Brennstoffe als Alternativbrennstoff in normalerweise mit Gas befeuerten Verbrennungsanlagen. Unter Beibehaltung der zur Verbrennung von Erdgas bestimmten Brenner sollen derart ausgelegte Verbrennungsanlagen wahlweise mit Gas oder Öl betrieben werden können. Dies wird gemäss den dort offenbarten Informationen dadurch erreicht, dass der flüssige Brennstoff zunächst in einem festgelegten Verhältnis mit Wasser oder Wasserdampf gemischt wird, dieses Gemisch anschliessend verdampft und dem Brenner zugeführt wird. Durch die gezielte Beimischung von Wasser oder Wasserdampf wird ein Spülgas (carrier gas, diluent vapor) erzeugt, welches die Eigenschaften des Gemischs im Hinblick auf den volumetrischen Heizwert den Betriebsbedingungen des Brenners anpasst.
Diese Lösungen haben den Nachteil, dass sie mehrstufig ausgelegt sind. Der Verdampfungsstufe des Brennstoffs ist eine separate Mischstufe zwecks Einstellung des erforderlichen Massenverhältnisses zwischen Brennstoffdampf und Spülgas vorgeschaltet.

Das zu verdampfende Gemisch wird in einem Röhrenverdampfer erhitzt, der, integriert in eine Brennkammer, von aussen mit heissen Verbrennungsgasen beaufschlagt wird. Dies lässt hohe Wandtemperaturen mit einer dementsprechend hohen Gefahr der Ablagerung von Verkokungsrückständen erwarten. Zum einen bereitet eine Beseitigung dieser Rückstände aus dem Verdampfer Schwierigkeiten, zum anderen gefährden mitgerissene Ablagerungen den Brennerbetrieb. Die Bildung von Ablagerungen wird zwar durch die vorgeschaltete Beimischung von Wasser oder Dampf zu dem Brennstoff etwas gemildert. Dennoch dürften bei dieser apparativen Variante Ablagerungen erhebliche Probleme bereiten.

### Darstellung der Erfindung

Aufgabe der Erfindung ist daher die Angabe eines *Brennstoffvorverdampfers* zur Speisung einer Gasturbine sowohl mit gasförmigen wie auch mit flüssigen Brennstoffen unter Erzielung gleicher volumetrischer Heizwerte bei beiden Brennstoffarten, der eine intensive aber schonende Verdampfung des flüssigen Brennstoffs erlaubt und damit die Gefahr der Bildung von Ablagerungen weiter vermindert.

Diese Aufgabe *wird* mit den Merkmalen des Kennzeichens des unabhängigen Anspruchs gelöst. Vorteilhafte Ausführungsformen eines solchen Brennstoffvorverdampfers sind durch die Merkmale der abhängigen Ansprüche umschrieben.

Ein solcher *Brennstoffvorverdampfer* hat insbesondere den Vorteil, dass sich die Konstruktion sehr wesentlich vereinfacht, und vor allem die Leistung der Gasturbine erhöhbar ist. Weiters ist ein Vorteil der Erfindung, dass der flüssige Brennstoff bei geringerer Temperatur verdampft werden kann und damit die Gefahr von Kohlenstoffablagerungen [Verkokung] verringert wird. Auch kann die Dichte des Brennstoff-Spülgasgemisches so eingestellt werden, dass die Eindringtiefe der Brennstoffstrahlen bei beiden Brennstoffarten im wesentlichen gleich ist, d.h. dass gleiche Impulsverhältnisse geschaffen werden können. Daraus ergibt sich für beide Brennstoffarten dasselbe Vormischverhalten. Ausserdem können die NOx-Emissionen verringert werden. Zudem wird die Gefahr der Niederschlagung von Brennstofftropfen an der Brennerwand ausgeschaltet, denn der Brenner erhält nur noch gasförmigen Brennstoff.

### Weg zur Ausführung der Erfindung

Weitere Merkmale und Vorteile ergeben sich aus der Beschreibung eines Ausführungsbeispiels *des Brennstoffvorverdampfer* anhand der Zeichnungen.

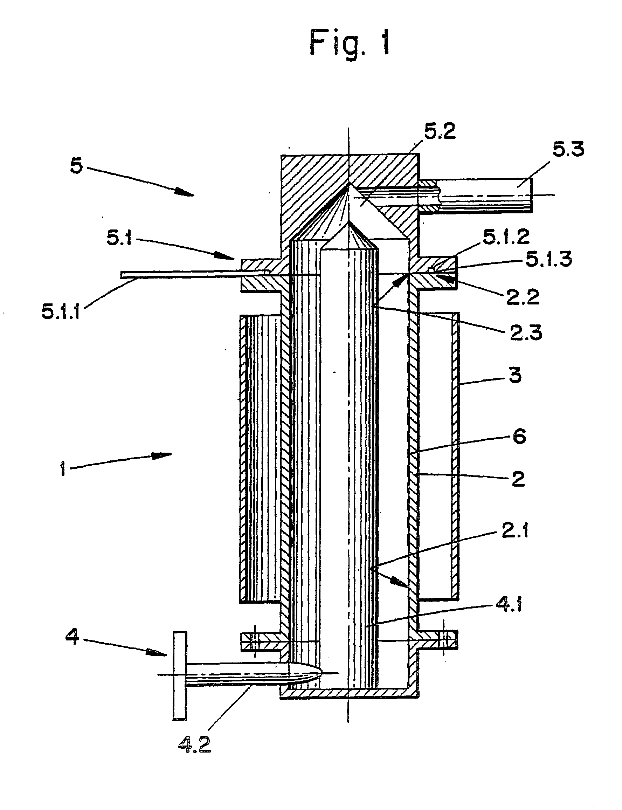

Es zeigen
- Fig. 1: *einen Brennstoffvorverdampfer* im Längsschnitt;

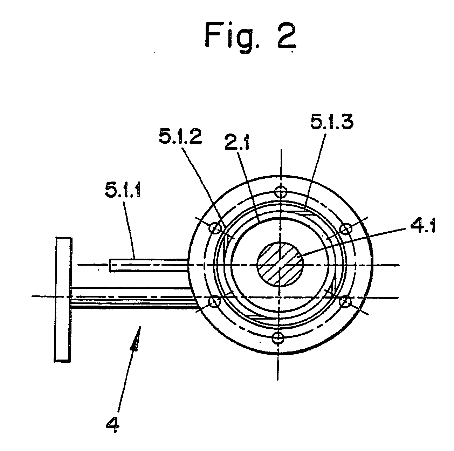

- Fig. 2: *einen Brennstoffvorverdampfer* im Querschnitt.

Bei einem Verfahren zur Aufbereitung von flüssigen Brennstoffen für deren Verwendung in einer auch mit gasförmigen Bennstoffen betreibbaren Gasturbine wird der flüssige Brennstoff in einer Aufbereitungseinrichtung mit einem *Spül*gas, welches Wasserdampf, der aus dem Dampfturbinenkreis abgezweigt wird, oder ein inertes Gas, beispielsweise N₂ oder CO₂, sein kann, aufbereitet zu einem Gasgemisch, das dann dem Brenner über die gleiche Zufuhreinrichtung wie der gasförmige Brennstoff zugeführt werden kann. Bei dieser Aufbereitung des flüssigen Brennstoffes wird im wesentlichen der gleiche volumetrische Heizwert und eine entsprechende Dichte mittels der Art, der Menge und der Temperatur des Spülgases wie beim ebenfalls zu verbrennenden gasförmigen Brennstoff hergestellt. Dazu wird der Brennstoff einem Ringkanal 5.1.2 in einer Brennstoffzu- und -abfuhreinrichtung 5 zugeführt, um in einem beheizten Zylinderraum eines Verdampferrohres 2 verdampft zu werden. Diese Verdampfung wird dadurch erreicht, dass ein dünner Brennstofffilm 6 des flüssigen Brennstoffes, vorzugsweise ein Film von 0,2mm - 0,5mm Dicke, auf der Innenwand des von aussen beheizten Verdampferrohres 2 dadurch erzeugt wird, dass der flüssige Brennstoff über eine Rohrkante oder einen Absatz 2.2 laufen muss. Dieser verdampfte flüssige Brennstoff wird mit einem von der anderen Seite des Verdampferrohres 2 zugeführten Spülgas, eben Wasserdampf oder ein inertes Gas, vermischt und so ein möglichst homogenes Brenngas hergestellt, welches in seinen Eigenschaften den Brenner betreffend dem ebenfalls verbrennbaren gasförmigen Brennstoff entspricht. Dieses Gasgemisch wird in einem Sammeldom 5.2 gesammelt und durch eine Abfuhrleitung 5.3, mit welcher noch Brennergegebenheiten eingestellt werden können, dem Brenner als Gas zugeführt.

Die Aufbereitungseinrichtung besteht aus einem Brennstoffvorverdampfer 1, welcher ein Verdampferrohr 2 aufweist, das aus einem gut wämeleitenden Material, vorzugsweise Kupfer, besteht, wobei es mit einer Heizeinrichtung 3 zusammenwirkt und im wesentlichen einen Wärmeaustauscher bildet. Diese Heizeinrichtung kann ein Mantelrohr sein, das das Verdampferrohr 2 umgibt, und welchem Heissdampf zugeführt wird, damit an der Innenseite 2.1 des Verdampferrohres 2 eine Temperatur von 150°C - 350°C herrscht, damit der Brennstofffilm 6 verdampfen kann. Dieser Heissdampf kann aus dem Dampfkreislauf einer angeschlossenen Dampfturbine abgezweigt werden. Zur Beheizung können aber auch heisse Abgase der Gasturbine dienen. Dieses Verdampferrohr 2 weist an seinem einen Ende eine Zufuhreinrichtung 4 für ein Spülgas und an seinem anderen Ende eine Brennstoffzu- und -abfuhreinrichtung 5 auf. Die Zufuhreinrichtung 4 für ein Spülgas besitzt vorzugsweise einen Mischerkörper 4.1, welcher in das Verdampferrohr 2 ragt und eine Verbesserung der Durchmischung des Spülgases mit dem Brennstoffdampf, also ein homogeneres Brenngas, ergibt. Zur weiteren Verbesserung der Durchmischung können auf dem Mischerkörper 4.1 die Turbulenz der Strömung verstärkende Elemente, wie Flügel oder Stacheln, angeordnet sein. Die Zufuhreinrichtung 4 für ein Spülgas weist auch ein Spülgasrohr 4.2 auf, welches im wesentlichen tangential in die Zufuhreinrichtung 4 *einmündet* und damit *das Spülgas* in den Innenraum des Verdampferrohres 2 *einleitet.* Die solcherweise entstandene Gasbahn kann noch speziell beeinflusst werden einerseits durch den schon erwähnten Mischerkörper 4.1 oder durch eine besondere Ausbildung des Einlaufendes des Spülgasrohres 4.2, wodurch eine im wesentlichen spiralschraubenlinenförmige Gasbahn entsteht. Das Ende des Spülgasrohres 4.2 kann zur weiteren Verbesserung der Durchmischung von Spülgas und Brennstoff düsenförmig ausgebildet sein. Am anderen Ende des Verdampferrohres 2 ist eine Brennstoffzuund -abfuhreinrichtung 5 im Bereich, welcher unmittelbar dem Verdampferrohr 2 benachbart ist, angeordnet. Diese enthält eine Flüssigbrennstoffzufuhreinrichtung 5.1, welche den Flüssigbrennstoff im Verdampferrohr 2 fein verteilt, sowie benachbart zu dieser Einrichtung 5.1 einen Sammeldom 5.2 mit einer ihm angeschlossenen Abfuhrleitung 5.3, um das Brennstoffdampf-Spülgasgemisch dem Brenner zuzuführen. Dabei können in dieser Abfuhrleitung noch Einstellorgane zur optimalen Gasregelung vorgesehen sein. Bei der Flüssigbrennstoffzufuhreinrichtung 5.1 ist ein Zufuhrrohr 5.1.1 vorgesehen, welches in einen Ringkanal 5.1.2 der Flüssigbrennstoffzufuhreinrichtung 5.1 mündet, der wenigstens eine tangential in das Verdampferrohr 2 einmündende Brennstoffeinspritzöffnung 5.1.3 enthält, die gegen einen Absatz 2.2 des Verdampferrohres 2 gerichtet ist. Es können vorzugsweise aber mehrere Brennstoffeinspritzöffnungen 5.1.3, beispielsweise vier, vorgesehen sein. Der Absatz 2.2 des Verdampferrohres 2 ist in der vorliegenden Ausführungsform durch die Stirnseite des Verdampferrohres gebildet, kann aber auch als ein selbständiges Element verwirklicht sein. Dabei bildet die *radial* innenliegende Kante des Absatzes 2.2 eine Filmablaufkante 2.3, über welche der Flüssigbrennstoff in das Verdampferrohr 2 läuft und sich dabei fein verteilt und so an dessen Innenwand 2.1 einen dünnen, vorzugsweise 0,2mm - 0,5mm dicken Film bildet. Dieser Brennstofffilm 6 verdampft an der beheizten Innenwand 2.1 und wird mit dem Spülgas vermischt und im Sammeldom 5.2 für die Weiterleitung an den Brenner gesammelt.

## Patentansprüche

1. Brennstoffvorverdampfer für einen flüssigen Brennstoff, umfassend ein Verdampferrohr [2], welches aus einem gut wärmeleitenden Material besteht, das mit einer Heizeinrichtung [3] zusammenwirkt, und über eine Zufuhreinrichtung [4] für ein Spülgas, eine Zufuhreinrichtung [5.1] für den flüssigen Brennstoff sowie eine Abfuhreinrichtung [5.3] für ein Brennstoffdampf/Spülgas-Gemisch verfügt, *wobei* das Verdampferrohr [2] an seinem einen Ende an die Zufuhreinrichtung [4] für das Spülgas und an seinem anderen Ende an die Zufuhreinrichtung [5.1] für den Brennstoff und die Abfuhreinrichtung [5.3] für das Brennstoffdampf/Spülgas-Gemisch angeschlosssen ist,
***dadurch gekennzeichnet, dass***
die Zufuhreinrichtung [5.1] *für den flüssigen Brennstoff* ein Zufuhrrohr [5.1.1] aufweist, welches in einen Ringkanal [5.1.2] mündet, der wenigstens eine tangential in das Verdampferrohr [2] einmündende Brennstoffeinspritzöffnung [5.1.3] enthält, die gegen einen Absatz [2.2] des Verdampferrohres [2] gerichtet ist, und die radial innenliegende Kante des Absatzes [2.2] eine Filmablaufkante [2.3] darstellt, über welche der Flüssigbrennstoff in das Verdampferrohr [2] sich verteilend läuft und so an dessen Innenwand [2.1] einen Film *[6]* bildet.

2. Brennstoffvorverdampfer nach Anspruch 1, **dadurch gekennzeichnet, dass** das Verdampferrohr [2] aus Kupfer besteht.

3. Brennstoffvorverdampfer nach Anspruch 1, **dadurch gekennzeichnet, dass** die Heizeinrichtung [3] das Verdampferrohr [2] wenigstens auf einem Teil seiner Länge umhüllt.

4. Brennstoffvorverdampfer nach Anspruch 3, **dadurch gekennzeichnet, dass** die Heizeinrichtung [3] durch Heissdampf oder heisse Abgase beheizt ist.

5. Brennstoffvorverdampfer nach Anspruch 1, **dadurch gekennzeichnet, dass** die Zufuhreinrichtung [4] für das Spülgas einen Mischerkörper [4.1] aufweist, welcher in das Verdampferrohr [2] ragt zur Verbesserung der Durchmischung des Spülgases mit dem Brennstoffdampf.

6. Brennstoffvorverdampfer nach Anspruch 1, **dadurch gekennzeichnet, dass** die Zufuhreinrichtung [4] für das Spülgas ein Spülgasrohr [4.2] besitzt, welches im wesentlichen tangential in die Zufuhreinrichtung [4] einmündet.

7. Brennstoffvorverdampfer nach Anspruch 6, **dadurch gekennzeichnet, dass** das Ende des Spülgasrohres [4.2] düsenförmig ausgebildet ist.

8. Brennstoffvorverdampfer nach Anspruch 1, **dadurch gekennzeichnet, dass** vier tangential in das Verdampferrohr [2] einmündende Brennstoffeinspritzöffnungen [5.1.3] vorgesehen sind.

## Claims

1. Fuel pre-evaporator for a liquid fuel, comprising an evaporator tube (2), which consists of a material with a good thermal conductivity and which interacts with a heating device (3), and which has a feed device (4) for a flushing gas, a feed device (5.1) for the liquid fuel and a discharge device (5.3) for a fuel vapour/flushing gas mixture, the evaporator tube (2), at one end, being connected to the feed device (4) for the flushing gas, and, at the other end, being connected to the feed device (5.1) for the fuel and the discharge device (5.3) for the fuel vapour/flushing gas mixture, **characterized in that** the feed device (5.1) for the liquid fuel has a feed pipe (5.1.1) which opens into an annular duct (5.1.2), which contains at least one fuel injection opening (5.1.3) which opens tangentially into the evaporator tube (2.2) and is directed towards a shoulder (2.2) of the evaporator tube (2), and the radially inner edge of the shoulder (2) forms a film run-off edge (2.3), via which the liquid fuel runs into the evaporator tube (2), distributing itself in the process, and thus forms a film (6) on the inner wall (2.1) of the said evaporator tube.

2. Fuel pre-evaporator according to Claim 1, **characterized in that** the evaporator tube (2) is made of copper.

3. Fuel pre-evaporator according to Claim 1, **characterized in that** the heating device (3) surrounds the evaporator tube (2) at least over part of its length.

4. Fuel pre-evaporator according to Claim 3, **characterized in that** the heating device (3) is heated by hot steam or hot exhaust gases.

5. Fuel pre-evaporator according to Claim 1, **characterized in that** the feed device (4) for the flushing gas has a mixer body (4.1), which protrudes into the evaporator tube (2) in order to improve mixing of the flushing gas with the fuel vapour.

6. Fuel pre-evaporator according to Claim 1, **characterized in that** the feed device (4) for the flushing gas has a flushing-gas tube (4.2) which opens essentially tangentially into the feed device (4).

7. Fuel pre-evaporator according to Claim 6, **characterized in that** the end of the flushing-gas tube (4.2) is of nozzle-shaped design.

8. Fuel pre-evaporator according to Claim 1, **characterized in that** four fuel injection openings (5.1.3) opening tangentially into the evaporator tube (2) are provided.

## Revendications

1. Pré-évaporateur de combustible pour un combustible liquide, qui comprend un tube d'évaporateur [2] qui est constitué d'un matériau bon conducteur de la chaleur, qui coopère avec un dispositif de chauffage [3] et qui dispose d'un dispositif d'amenée [4] pour un gaz de dilution, d'un dispositif d'amenée [5.1] pour le combustible liquide ainsi que d'un dispositif d'évacuation [5.3] pour un mélange de gaz de dilution et de vapeur de combustible, le tube d'évaporateur [2] étant raccordé à l'une de ses extrémités au dispositif d'amenée [4] du gaz de dilution et à son autre extrémité au dispositif d'amenée [5.1] du combustible et au dispositif d'évacuation [5.3] du mélange de gaz de dilution et de vapeur de combustible, **caractérisé en ce que** le dispositif d'amenée [5.1] du combustible liquide présente un tube d'amenée [5.1.1] qui débouche dans un canal annulaire [5.1.2] qui contient au moins une ouverture d'injection de combustible [5.1.3] qui débouche tangentiellement dans le tube d'évaporateur [2] et qui est orientée contre un épaulement [2.2] du tube d'évaporateur [2], le bord radialement intérieur de l'épaulement [2.2] constituant un bord [2.3] d'écoulement de film grâce auquel le combustible liquide s'étend dans le tube d'évaporateur [2] en se répartissant et forme ainsi sur sa paroi intérieure [2.1] un film [6].

2. Pré-évaporateur de combustible selon la revendication 1, **caractérisé en ce que** le tube d'évaporateur [2] est constitué de cuivre.

3. Pré-évaporateur de combustible selon la revendication 1, **caractérisé en ce que** le dispositif de chauffage [3] entoure le tube d'évaporateur {2] au moins sur une partie de sa longueur.

4. Pré-évaporateur de combustible selon la revendication 3, **caractérisé en ce que** le dispositif de chauffage [3] est chauffé par de la vapeur chaude ou par des gaz d'échappement chauds.

5. Pré-évaporateur de combustible selon la revendication 1, **caractérisé en ce que** le dispositif d'amenée [4] du gaz de dilution présente un corps mélangeur [4.1] qui pénètre dans le tube d'évaporateur [2] pour améliorer le mélange intime du gaz de dilution avec la vapeur de combustible.

6. Pré-évaporateur de combustible selon la revendication 1, **caractérisé en ce que** le dispositif d'amenée [4] du gaz de dilution présente un tube [4.2] de gaz de dilution qui débouche essentiellement tangentiellement dans le dispositif d'amenée [4].

7. Pré-évaporateur de combustible selon la revendication 6, **caractérisé en ce que** l'extrémité du tube [4.2] de gaz de dilution est configurée en forme de gicleur.

8. Pré-évaporateur de combustible selon la revendication 1, **caractérisé en ce que** quatre ouvertures [5.1.3] d'injection de combustible qui débouchent tangentiellement dans le tube d'évaporateur [2] sont prévues.
